# EUROPÄISCHE PATENTANMELDUNG

(11) **EP 3 182 317 A1**
(43) Veröffentlichungstag der Anmeldung: **21.06.2017**
(21) Anmeldenummer: 16199796.0
(22) Anmeldetag: 21.11.2016
(51) Int. Cl.: G06F 21/32, G06F 21/34, H04L 29/06, H04W 12/06, H04L 9/32

(54) **VORRICHTUNG UND VERFAHREN FÜR DIE PERSONALISIERTE BEREITSTELLUNG EINES SCHLÜSSELS**

(30) Priorität: 17.12.2015 DE 102015225778
(71) Anmelder: Deutsche Post AG, 53113 Bonn (DE)
(72) Erfinder: Bobinski, Mike, 53113 Bonn (DE)
(74) Vertreter: Jostarndt Patentanwalts-AG

(57) **Zusammenfassung**

Die Erfindung betrifft eine Vorrichtung und ein Verfahren für die personalisierte Bereitstellung eines Schlüssels für die Bearbeitung einer Zielinformation. Eine erfindungsgemäße Vorrichtung für die personalisierte Bereitstellung eines Schlüssels für die Bearbeitung einer Zielinformation, wobei die Vorrichtung an einem Nutzer anbringbar ist, umfasst eine Informationserhalteeinrichtung zum Erhalten einer biometrischer Informationen über den Nutzer, ein Speichermittel zur Speicherung einer biometrischen Referenzinformation, ein Authentifizierungsmittel zum Vergleichen der biometrischen Information des Nutzers, erhalten durch das biometrische Informationsgewinnungsmittel mit der gespeicherten biometrischen Referenzinformation sowie ein Ausgabemittel zur Ausgabe einer Information. Insbesondere umfasst die erfindungsgemäße Vorrichtung weiterhin eine Kryptografieeinrichtung, wobei mittels der Kryptografieeinrichtung mit der biometrischen Information des Nutzers der Schlüssel erzeugbar ist, wobei der Schlüssel über das Ausgabemittel ausgebbar ist.

Das erfinderische Verfahren für die personalisierte Bereitstellung eines Schlüssels für die Bearbeitung einer Zielinformation über eine an einem Nutzer anbringbare Vorrichtung umfasst die Schritte Erhalten einer biometrischen Informationen über den Nutzer, Vergleichen der erhaltenen biometrischen Information des Nutzers mit einer zuvor gespeicherten biometrischen Referenzinformation sowie Erzeugen des Schlüssels für die Bearbeitung der Zielinformation mit der biometrischen Information des Nutzers.

## Beschreibung

Die Erfindung betrifft eine Vorrichtung und ein Verfahren sowie ein System für die personalisierte Bereitstellung eines Schlüssels für die Bearbeitung einer Zielinformation, wobei der Zugriff auf den Schlüssel durch biometrische Verfahren geschützt ist.

Die Zielinformation kann ihrerseits einen Schlüssel für einen sicheren Zugang darstellen. Bei dem Zugang kann es sich um eine Tür, beispielsweise die Tür zu einem Fach wie beispielsweise einer Paketfachanlage, einem Bankfach oder auch einem Raum oder einem zugangsbeschränkten Bereich handeln. Bei dem zugangsbeschränkten Bereich kann es sich um eine Veranstaltungshalle oder - bereich, ein Stadion oder auch einen Sicherheitsbereich handeln. Genauso ist unter Zugang auch der Zugang zu einer Information zu verstehen, wobei die Information mit dem Schlüssel entschlüsselbar ist, wenn die Information verschlüsselt vorliegt, oder die Information beispielsweise für eine sichere Weitergabe verschlüsselbar ist. Weiterhin ist unter Zugang auch die Genehmigung einer Transaktion, beispielsweise einer Überweisung beim elektronischen Bankverkehr oder der beispielsweise elektronische Zugang zu einem Dokument, beispielsweise einer Eintrittserlaubnis, zu verstehen.

Im Stand der Technik sind verschiedene Verfahren und Vorrichtungen zur Schlüsselbereitstellung bekannt. Beispielsweise können Transaktionsnummern (TAN) von einem Provider erzeugt und an den Nutzer beispielsweise mit einem Informationsdienst wie dem Short Message Service (SMS) übermittelt werden. Ebenso können persönliche Identifikationsnummern (PIN) oder Passwörter einem Nutzer zur Verfügung gestellt werden. Diese können wiederum für den wiederkehrenden Gebrauch oder nur den einmaligen Gebrauch erzeugt sein. Weiterhin sind Ausweise, beispielsweise Zutrittsausweise, mit verschiedenen aufbeziehungsweise angebrachten Sicherheitsmerkmalen bekannt.

Bei der Übermittlung der Schlüssel kann es zu Fehlern und in der Folge zu unberechtigter Nutzung eines Schlüssels kommen. Auch ist es bereits zu Missbrauch durch gezieltes unberechtigtes Abgreifen bei der Übermittlung gekommen.

Es besteht allgemein der Bedarf nach einer Erhöhung der Sicherheit.

Seit geraumer Zeit ist die Nutzung biometrischer Informationen über einen Nutzer zu dessen Authentifizierung bekannt. Dabei werden biometrische Daten, beispielsweise Daten aus einem Fingerabdruck oder einem Augenscan (Augenhintergrund oder Regenbogenhaut) benutzt. Für ein biometrisches Erkennungssystem werden im Wesentlichen die Schritte Messwertaufnahme, Merkmalsextraktion und Merkmalsvergleich genutzt. Für die Messwertaufnahme kommen Sensoren zum Einsatz, wobei die Sensorart stark vom biometrischen Charakteristikum abhängt. So ist eine Videokamera für die meisten Charakteristika geeignet; für die Fingerabdruckerkennung kommen auch andere bildgebende Verfahren in Frage. Die Sensorkomponente liefert als Ergebnis ein biometrisches Sample. Die Merkmalsextraktion liefert als Ergebnis komplexer Algorithmen biometrischen Merkmale. Beim Merkmalsvergleich wird schließlich ein Vergleichswert zwischen dem in einer Einlernphase gespeicherten biometrischen Referenzwert und dem aktuellen, von der Merkmalsextraktion gelieferten Datensatz errechnet. Über- bzw. unterschreitet dieser Vergleichswert eine (einstellbare) Schwelle, gilt die Erkennung als erfolgreich.

Die Nutzung biometrischer Informationen über einen Nutzer ist je nach Schwellwert geeignet, die Sicherheit für einen Zugang zu erhöhen. Allerdings stellt sich das Verfahren in der Praxis als aufwändig heraus: es werden aufwändige Sensoren für die Aufnahme der Biometriemerkmale benötigt, die an jeder möglichen Zugangsstelle angebracht sein müssen. Diese Sensoren sind in der Praxis mit einem Zentralrechner verbunden, in dem die Referenzdaten abgespeichert sind und auf dem der Merkmalsvergleich durchgeführt wird. Das Ergebnis des Merkmalsvergleich wird an die Zugangsstelle übermittelt und die entsprechende Aktion, d.h. Zugangsgewährung oder Zugangsverweigerung, vor Ort ausgelöst.

Aufgabe der Erfindung ist es daher, eine Vorrichtung und ein entsprechendes Verfahren für die personalisierte Bereitstellung eines Schlüssels für die Bearbeitung einer Zielinformation bereitzustellen, mit dem die Sicherheit der Schlüsselbereitstellung erhöht wird und gleichzeitig der Aufwand gegenüber bekannten Verfahren mit erhöhter Sicherheit minimiert wird. Weiterhin ist es Aufgabe der Erfindung, ein System für die personalisierte Bereitstellung eines Schlüssels für die Bearbeitung einer Zielinformation anzugeben.

Erfindungsgemäß wird diese Aufgabe durch eine Vorrichtung mit den Merkmalen des unabhängigen Anspruches 1 gelöst. Vorteilhafte Weiterbildungen der Vorrichtung ergeben sich aus den Unteransprüchen 2-6. Die Aufgabe wird ferner durch ein Verfahren nach Anspruch 7 gelöst. Vorteilhafte Ausführungsformen des Verfahrens ergeben sich aus den Unteransprüchen 8-14. Die weitere Aufgabe der Erfindung wird durch das System gemäß Anspruch 15 gelöst.

Eine erfindungsgemäße Vorrichtung für die personalisierte Bereitstellung eines Schlüssels für die Bearbeitung einer Zielinformation, wobei die Vorrichtung an einem Nutzer anbringbar ist, umfasst eine Informationserhalteeinrichtung zum Erhalten einer biometrischer Informationen über den Nutzer, ein Speichermittel zur Speicherung einer biometrischen Referenzinformation, ein Authentifizierungsmittel zum Vergleichen der biometrischen Information des Nutzers, erhalten durch das biometrische Informationsgewinnungsmittel mit der gespeicherten biometrischen Referenzinformation sowie ein Ausgabemittel zur Ausgabe einer Information. Insbesondere umfasst die erfindungsgemäße Vorrichtung weiterhin eine Kryptografieeinrichtung, wobei mittels der Kryptografieeinrichtung mit der biometrischen Information des Nutzers der Schlüssel erzeugbar oder der Zugriff auf einen zuvor generierten und gespeicherten Schlüssel freischaltbar ist, wobei der Schlüssel über das Ausgabemittel ausgebbar ist.

Das erfinderische Verfahren für die personalisierte Bereitstellung eines Schlüssels für die Bearbeitung einer Zielinformation über eine an einem Nutzer anbringbare Vorrichtung umfasst die Schritte Erhalten einer biometrischen Informationen über den Nutzer, Vergleichen der erhaltenen biometrischen Information des Nutzers mit einer zuvor gespeicherten biometrischen Referenzinformation sowie Erzeugen des Schlüssels oder Freischalten des Zugriffs auf einen zuvor generierten und gespeicherten Schlüssel für die Bearbeitung der Zielinformation mit der biometrischen Information des Nutzers.

Das Verfahren zeichnet sich also dadurch aus, dass eine biometrische Information über den Nutzer dazu benutzt wird, den Schlüssel für die Bearbeitung der Zielinformation zu erzeugen oder freizuschalten. Damit ist der Schlüssel nur mit einer einzigartigen Information, über die nur der Nutzer verfügt, erzeugbar oder freischaltbar. Der Schlüssel wird erst im Moment, in dem er benötigt wird, von der Vorrichtung erzeugt oder freigeschaltet und muss nicht an den Nutzer übermittelt werden. Wenn sich die Vorrichtung bei dem Nutzer befindet, entfällt der fehlerträchtige Schritt der Übermittlung des Schlüssels von einer externen Stelle an den Nutzer. Der Nutzer benötigt keine Empfangseinrichtung wie beispielsweise ein elektronisches Gerät mit Internetverbindung. Dadurch wird die Sicherheit des Verfahrens erhöht und der Aufwand reduziert.

In einer vorteilhaften Ausführungsform weist das erfinderische Verfahren weiterhin der Schritt der Überprüfung auf, ob die Vorrichtung an dem Nutzer angebracht ist. Der Schlüssel wird nur dann erzeug, wenn die Vorrichtung an dem Nutzer angebracht ist. Dazu umfasst die erfindungsgemäße Vorrichtung einen Sensor, mittels dessen überprüfbar ist, ob die Vorrichtung an dem Nutzer angebracht ist.

Beispielsweise kann für die Erzeugung des Schlüssels das biometrische Merkmal in dem Moment erfasst werden, wenn der Schlüssel erzeugt werden soll. Über den Sensor in der Vorrichtung wird das biometrische Merkmal erfasst und mit dem in der Vorrichtung abgespeicherten Referenzmerkmal verglichen. Wenn innerhalb zuvor bestimmbarer Grenzen Übereinstimmung zwischen dem erfassten Merkmal und dem Referenzmerkmal herrscht, wird die Kryptografieeinrichtung der Vorrichtung freigeschaltet und/oder der Schlüssel mit der Eingangsinformation des erfassten Biometriemerkmals oder alternativ des Referenzmerkmals erzeugt.

In einer weiteren vorteilhaften Ausführungsform wird als biometrische Information des Nutzers eine biometrische Information benutzt, die nur einem lebenden Organismus abnehmbar ist. Solche biometrischen Informationen sind beispielsweise der Puls oder das Muster im Augenhintergrund oder der Regenbogenhaut. Beispielsweise kann ein Fingerabdruck hingegen auch einem gestorbenen Menschen abgenommen werden. Der Puls eines Menschen ist mit ausreichender Sicherheit einmalig, d.h. der Puls ist für fast alle Personen unterschiedlich. Weiterhin lässt sich aus dem Puls ein Kennwert ableiten, der für eine Person unabhängig von deren Alter oder dem Messzeitpunkt ist. Der Puls eines Menschen ist darüber hinaus einfach und sehr gut reproduzierbar messbar. Ähnliches gilt für das Muster im Augenhintergrund oder der Regenbogenhaut.

Weiterhin hat es sich als vorteilhaft erwiesen, wenn die Vorrichtung in einem Ausrüstungsgegenstand integriert ist, der an dem Nutzer anbringbar ist. Für solche Ausrüstungsgegenstände hat sich der Name Wearables für Wearable Computing etabliert. Abhängig von der biometrischen Information sind unterschiedliche Ausrüstungsgegenstände denkbar und vorteilhaft. Beispielsweise kann es sich bei dem Ausrüstungsgegenstand um ein Band wie einen Brustgurt oder ein Armband handeln. Solche Bänder sind leicht anzulegen und bieten einen guten Kontakt der darin angeordneten Vorrichtung, insbesondere einer in der Vorrichtung angeordneten Informationserhalteeinrichtung zu dem Nutzer, so dass das Biometriemerkmal zuverlässig aufnehmbar ist. Der Ausrüstungsgegenstand kann aber auch beispielsweise eine Brille wie ein sogenanntes smart glass sein, in die die Vorrichtung integriert ist.

Es hat sich darüber hinaus als vorteilhaft erwiesen, wenn der Schlüssel ausgegeben wird, besonders bevorzugt drahtlos ausgegeben wird. Dazu weist die erfindungsgemäße Vorrichtung bevorzugt ein Ausgabemittel auf, das zur drahtlosen Informationsübermittlung geeignet ist. Die drahtlose Ausgabe kann dabei beispielsweise über Near Field Communication (NFC), d.h. über Funktechnik, beispielsweise WLAN oder RFID und Bluetooth, oder auch optisch, beispielsweise via Infrarotschnittstellen, erfolgen.

In einer vorteilhaften Ausführungsform weist die Kryptografieeinrichtung einen Kryptochip auf. Die kryptographischen Rechenoperationen werden damit in einem eigenen geschützten Prozessor ausgeführt, was die Sicherheit weiter erhöht. Dieser Prozessor stellt einen kompletten Einchip-Rechner (Mikroprozessor, RAM, ROM, EEPROM, Betriebssystem) mit aufwändigen, festverdrahteten und programmierbaren Sicherheitsfunktionen dar. Sicherheitsrelevante Daten lassen sich nicht direkt auslesen, da sie nur dem Prozessor zur Verfügung stehen.

Es ist auch möglich, mit dem erzeugten Schlüssel eine zuvor in der Vorrichtung gespeicherte verschlüsselte Information zu entschlüsseln. Dabei kann die in der Vorrichtung gespeicherte verschlüsselte Information über ein Eingabemittel, beispielsweise einen Empfänger für NFC oder eine optische Schnittstelle, in den Speicher der Vorrichtung gelangen. Die entschlüsselte Information kann beispielsweise auf einem Display der Vorrichtung angezeigt werden. Die entschlüsselte Information kann aber auch aus der Vorrichtung beispielsweise wiederum über NFC oder eine optische Schnittstelle ausgegeben werden.

Umgekehrt ist es auch möglich, mit dem erzeugten Schlüssel eine zuvor in der Vorrichtung gespeicherte Information zu verschlüsseln. Dabei kann die in der Vorrichtung gespeicherte verschlüsselte Information über ein Eingabemittel wie zuvor genannt in den Speicher der Vorrichtung gelangen. Die kann aus der Vorrichtung beispielsweise wiederum über NFC oder eine optische Schnittstelle ausgegeben werden.

Weiterhin ist es möglich, mit dem erzeugten Schlüssel eine zuvor in der Vorrichtung gespeicherte Information zu signieren.

Bei allen Eingaben und/oder Ausgaben ist natürlich auch die Benutzung einer drahtgebundene Schnittstelle wie beispielsweise einer USB-Schnittstelle denkbar.

In einer vorteilhaften Ausführungsform ist dem Verfahren für die personalisierte Bereitstellung eines Schlüssels für die Bearbeitung einer Zielinformation eine Initialisierung der an dem Nutzer anbringbaren Vorrichtung vorgeschaltet. Die Initialisierung weist folgende Schritte auf:
Erhebung und Speicherung der Identität des Nutzers
Vergabe einer eindeutigen Nutzer-ID
Erhalten einer biometrischen Information über den Nutzer
Initialisierung einer elektronischen Vorrichtung für die Schlüsselgenerierung für die
Nutzer-ID und Generierung eines Masterschlüsselpaars, enthaltend einen öffentlichen und einen privaten Schlüssel
Erzeugen eines digitalen Datensatzes zur Bestätigung der Identität des Nutzers unter Benutzung des öffentlichen Schlüssels
Speicherung des digitalen Datensatzes in der elektronischen Vorrichtung.

Durch den Start der Initialisierung seiner Vorrichtung durch den Nutzer wird die Erhebung der Identität des Nutzers beispielsweise in einem Identifizierungsservice gestartet. Diese Erhebung der Identität kann beispielsweise durch das Vorlegen eines amtlichen Lichtbildausweises des Nutzers geschehen, was persönlich beispielsweise über das Postldent-Verfahren der deutschen Post AG erfolgen kann. Es kann aber auch beispielsweise durch das Videoldent-Verfahren unter Umgehung der Notwendigkeit des persönlichen Erscheinens des Nutzers beispielsweise in einer Filiale der deutschen Post erfolgen. Die Identität des Nutzers wird vom Identifizierungsservice gespeichert und eine anonyme eineindeutige Nutzer-ID vergeben. Diese Nutzer-ID wird an die Vorrichtung übermittelt, die der Nutzer spätestens jetzt anlegen muss. Die Vorrichtung erfasst eine vorgesehene Biometrieinformation des Nutzers als biometrische Referenzinformation. Anschließend wird in der Vorrichtung der Kryptografieeinrichtung für die Nutzer-ID initialisiert und ein Masterschlüsselpaar, enthaltend einen öffentlichen und einen privaten Schlüssel, generiert. Der öffentliche Schlüssel wird von der Vorrichtung an den Identifizierungsservice versendet und dort zur Erzeugung eines oder mehrerer digitaler Datensätze verwendet, die die Identität des Nutzers in Form seiner Nutzer-ID oder anderer Identitätsattribute wie beispielsweise Vorname und Nachname beinhaltet. Eine mögliche Form des digitalen Datensatzes kann in Form eines X.509 Zertifikates umgesetzt werden. Eine vorteilhafte Ausprägung ist darüber hinaus, wenn die Vorrichtung selber über eine eineindeutige Kennung verfügt, die sie bei der Übertragung an den Identifizierungsservice mitsendet, damit diese zusammen mit den digitalen Datensätzen im Identifizierungsservice zu den Nutzerdaten gespeichert werden. Weiterhin werden der digitale Datensatz beziehungsweise die digitalen Datensätze an die Vorrichtung gesendet und dort in der Kryptografieeinrichtung gespeichert. Dadurch sind die Vorrichtung und die Identität des Nutzers wechselseitig referenziert und aneinander gekoppelt.

Ein weiterer sich aus dieser Konstellation ergebender Vorteil ist beispielsweise die unpersönliche Zustellung eines Gegenstands, der nur beispielsweise an volljährige Personen zugestellt werden darf. Handelt es sich bei dem Gegenstand beispielsweise um ein Paket, so darf dieses im Stand der Technik nur persönlich übergeben werden, wobei sich der Empfänger mittels eines amtlichen Lichtbildausweises gegenüber der zustellenden Person ausweisen und insbesondere als volljährig ausweisen muss. Durch die bekannte Identität des Nutzers, der ja bei der Initialisierung der Vorrichtung einen amtlichen Lichtbildausweis vorlegen muss, ist nun bekannt, ob dieser Nutzer beispielsweise volljährig ist. Entsprechende Sendungen können damit beispielsweise an eine Paketfachstation wie die Packstation der deutschen Post AG zugestellt werden, wenn der Nutzer der Packstation diese ausschließlich mit der erfinderischen Vorrichtung öffnen kann. Der Zusteller kann damit sicher sein, dass nur der richtige Nutzer das Paket der Packstation entnimmt.

Die Vorrichtung kann beispielsweise so eingerichtet sein, dass die Initialisierung nur einmalig ausgeführt werden kann. Dies kann beispielsweise dadurch erreicht werden, dass das Speichermittel zur Speicherung der biometrischen Referenzinformation als WORM (write once read many) ausgeführt ist.

Möchte nun ein Nutzer beispielsweise Zugang zu einem Zugangspunkt erhalten, so meldet er dies dem Zugangspunkt. Dieser fordert die Authentisierung des Nutzers beim Nutzer an. Dieser legt spätestens jetzt die Vorrichtung an, die die biometrische Information beim Nutzer erhebt und mit der in der Vorrichtung gespeicherten biometrischen Referenzinformation abgleicht. Fällt der Abgleich negativ aus, wird eine Fehlermeldung angezeigt und der Prozess abgebrochen. Die Anzeige kann beispielsweise über ein Display oder einem anderen Signal wie beispielsweise einer Lampe an der Vorrichtung erfolgen. Aber auch der Abbruch des Prozesses kann als Anzeige verstanden werden. Fällt der Abgleich hingegen positiv aus, wird die Kryptografieeinrichtung in der Vorrichtung freigeschaltet, die einen digitalen Datensatz mit der Nutzer-ID an den Zugangspunkt übermittelt. Die Authentisierung der Vorrichtung kann anschließend beispielsweise mit dem Challenge-Response-Verfahren erfolgen. Bei diesem dem Fachmann bekannten Verfahren sendet der Zugangspunkt eine Zufallszahl an die Vorrichtung. Die Kryptografieeinrichtung der Vorrichtung ergänzt diese Zahl um ihren öffentlichen Schlüssel, wendet eine kryptologische Verschlüsselung auf diese Kombination an und sendet das Ergebnis an den Zugangspunkt, der sowohl die Zufallszahl als auch den öffentlichen Schlüssel und die verwendete Verschlüsselung kennt, und dieselbe Berechnung durchführt, sein Ergebnis mit dem von der Vorrichtung erhaltenen Ergebnis vergleicht und bei Datenidentität auf erfolgreiche Authentisierung erkennt. Anschließend überprüft der Zugangspunkt beispielsweise, ob die vom Nutzer übermittelte Nutzerkennung wie beispielsweise die Nutzer-ID oder der Schlüssel in einer lokalen Datenbank enthalten ist und gibt den Zugang frei, sofern dies der Fall ist. Eine Erfolgsmeldung kann dem Nutzer angezeigt werden. Im Falle von negativen Vergleichsergebnissen können dem Nutzer Fehlermeldungen angezeigt werden.

Durch die Initialisierung ist bei einer späteren Schlüsselgenerierung durch die Vorrichtung der Nutzer identifizierbar. Es kann somit beispielsweise nicht nur geprüft werden, ob die Vorrichtung authentisiert ist, sondern auch, ob die Vorrichtung von dem berechtigten Nutzer benutzt wird, wobei der Nutzer identifizierbar ist. Mit anderen Worten ist die Bindung der Vorrichtung an den Nutzer überprüfbar. Über die Vorrichtung ist eine 1:1-Beziehung zwischen dem Nutzer und der Nutzer-ID gegeben.

Der Nutzer kann mit der Vorrichtung und dem Identifizierungsservice identifiziert werden.

In einer ersten Variante zur Identifizierung meldet der Nutzer einen Zugangswunsch zu einem Zugangspunkt an diesen Zugangspunkt. Dieser fordert wie oben beschrieben die Authentisierung des Nutzers beim Nutzer an. Dieser legt spätestens jetzt die Vorrichtung an, die die biometrische Information beim Nutzer erhebt und mit der in der Vorrichtung gespeicherten biometrischen Referenzinformation abgleicht. Fällt der Abgleich negativ aus, wird eine Fehlermeldung angezeigt und der Prozess abgebrochen. Die Anzeige kann beispielsweise über ein Display oder einem anderen Signal wie beispielsweise einer Lampe an der Vorrichtung erfolgen. Aber auch der Abbruch des Prozesses kann als Anzeige verstanden werden. Fällt der Abgleich hingegen positiv aus, wird die Kryptografieeinrichtung in der Vorrichtung freigeschaltet, die einen digitalen Datensatz mit der Nutzer-ID an den Zugangspunkt übermittelt. Die Authentisierung der Vorrichtung kann anschließend beispielsweise mit dem Challenge-Response-Verfahren erfolgen. Bei diesem dem Fachmann bekannten Verfahren sendet der Zugangspunkt eine Zufallszahl an die Vorrichtung. Die Kryptografieeinrichtung der Vorrichtung ergänzt diese Zahl um ihren öffentlichen Schlüssel, wendet eine kryptologische Verschlüsselung auf diese Kombination an und sendet das Ergebnis an den Zugangspunkt, der sowohl die Zufallszahl als auch den öffentlichen Schlüssel und die verwendete Verschlüsselung kennt, und dieselbe Berechnung durchführt, sein Ergebnis mit dem von der Vorrichtung erhaltenen Ergebnis vergleicht und bei Datenidentität auf erfolgreiche Authentisierung erkennt. An dieser Stelle nun sendet der Zugangspunkt eine Abfrage der Identitätsdaten zu der Nutzer-ID an den Identifizierungsservice. Dieser authentisiert den Zugangspunkt und ruft die Identitätsdaten des Nutzers, identifiziert anhand der Nutzer-ID, aus dem Speicher ab und sendet sie an den Zugangspunkt, wo diese verarbeitet, beispielsweise die Zugangsberechtigung lokal gespeichert werden.

In einer zweiten Variante zur Identifizierung meldet der Nutzer einen Zugangswunsch zu einem Zugangspunkt an diesen Zugangspunkt. Dieser fordert die Identifizierung des Nutzers beim Identifizierungsservice an. Der Identifizierungsservice fordert daraufhin die Authentisierung des Nutzers bei diesem an. Spätestens jetzt legt der Nutzer die Vorrichtung an, die die biometrische Information beim Nutzer erhebt und mit der in der Vorrichtung gespeicherten biometrischen Referenzinformation abgleicht. Fällt der Abgleich negativ aus, wird eine Fehlermeldung angezeigt und der Prozess abgebrochen. Die Anzeige kann beispielsweise über ein Display oder einem anderen Signal wie beispielsweise einer Lampe an der Vorrichtung erfolgen. Aber auch der Abbruch des Prozesses kann als Anzeige verstanden werden. Fällt der Abgleich hingegen positiv aus, wird die Kryptografieeinrichtung in der Vorrichtung freigeschaltet, die einen digitalen Datensatz mit der Nutzer-ID an den Identifizierungsservice übermittelt. Der Identifizierungsservice authentisiert nun die Vorrichtung beispielsweise mit dem oben beschriebenen Challenge-Response-Verfahren. Sofern die Authentisierung erfolgreich abgeschlossen werden konnte, kann eine Anfrage zur Freischaltung seiner Identitätsdaten an den Nutzer erfolgen. Schaltet er seine Identitätsdaten frei oder im Falle, dass es keiner Anfrage zur Freischaltung bedarf, ruft der Identitätsservice die Identitätsdaten aus seinem Speicher ab und sendet sie an den Zugangspunkt, wo diese verarbeitet, beispielsweise die Zugangsberechtigung lokal gespeichert werden.

Durch diese Maßnahmen wir die Sicherheit er Schlüsselbereitstellung erhöht, wobei gleichzeitig der Aufwand gegenüber bekannten Verfahren mit erhöhter Sicherheit minimiert wird. Die Sicherheit wird nochmals erhöht, wenn die benutzte biometrische Information so ausgewählt wird, dass sie nur einem lebenden Organismus abgenommen werden kann. Solche biometrischen Informationen sind beispielsweise der Puls oder das Muster im Augenhintergrund oder der Regenbogenhaut.

Ein erfinderisches System für die personalisierte Bereitstellung eines Schlüssels für die Bearbeitung einer Zielinformation, zeichnet sich dadurch aus, dass das System eine Initialisierungskomponente enthält, weiterhin einen Zugangspunkt und eine an einem Nutzer anbringbare Vorrichtung für die personalisierte Bereitstellung eines Schlüssels für die Bearbeitung einer Zielinformation enthält, wobei die Initialisierungskomponente Mittel zur Erhebung der Identität eines Nutzers, Mittel zur Speicherung der Identität des Nutzers, Mittel zur Vergabe einer eineindeutigen Nutzer-ID, Mittel zur Erzeugung eines digitalen Datensatzes und Mittel zur Speicherung eines digitalen Datensatzes enthält, und wobei der Zugangspunkt Mittel zur Anmeldung eines Zugangswunsches durch den Nutzer, Mittel zur Anforderung der Authentisierung des Nutzers, Mittel zum Empfang eines digitalen Datensatzes, Mittel zur Authentisierung des Nutzers und Mittel zur Abfrage von Identitätsdaten einer Nutzer-ID aufweist.

Die Sicherheit kann noch weiter erhöht werden, wenn die Komponenten der Vorrichtung wie die Informationserhalteeinrichtung, das Speichermittel, das Authentifizierungsmittel, das Ausgabemittel und die Kryptografieeinrichtung in der Vorrichtung derart gekapselt sind, dass sie manipulationssicher sind, d.h. beispielsweise die Aufnahme der Daten nicht simuliert werden oder die Informationen nicht während der Übertragung oder Speicherung verändert werden können. Dies kann beispielsweise dadurch erreicht werden, dass die Komponenten physisch geschützt werden, beispielsweise in der Vorrichtung eingegossen sind. Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: Ablaufdiagramm für die Initialisierung der Vorrichtung
- Fig. 2: Ablaufdiagramm für die Authentisierung des Nutzers
- Fig. 3: Ablaufdiagramm für die Identifizierung des Nutzers Variante 1
- Fig. 4: Ablaufdiagramm für die Identifizierung des Nutzers Variante 2
- Fig. 5: Schemadarstellung einer erfinderischen Vorrichtung

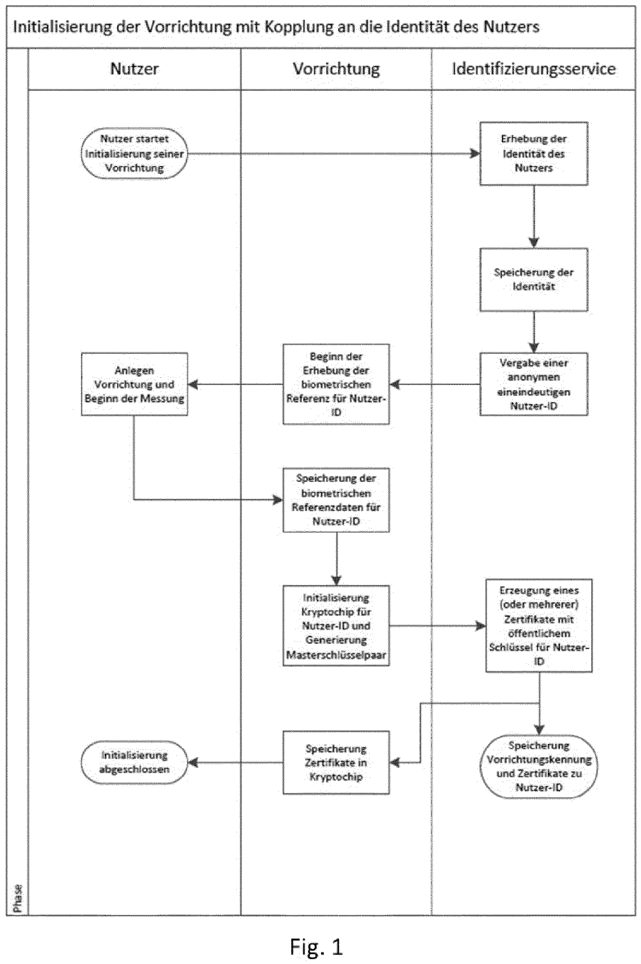

Fig. 1 ist ein Ablaufdiagramm für die Initialisierung der Vorrichtung 1.
Durch den Start der Initialisierung seiner Vorrichtung 1 durch den Nutzer wird die Erhebung der Identität des Nutzers beispielsweise in einem Identifizierungsservice gestartet. Diese Erhebung der Identität kann beispielsweise durch das Vorlegen eines amtlichen Lichtbildausweises des Nutzers geschehen, was persönlich beispielsweise über das Postldent-Verfahren der deutschen Post AG erfolgen kann. Es kann aber auch beispielsweise durch das Videoldent-Verfahren unter Umgehung der Notwendigkeit des persönlichen Erscheinens des Nutzers beispielsweise in einer Filiale der deutschen Post erfolgen. Die Identität des Nutzers wird vom Identifizierungsservice gespeichert und eine anonyme eineindeutige Nutzer-ID vergeben. Diese Nutzer-ID wird an die Vorrichtung 1 übermittelt, die der Nutzer spätestens jetzt anlegen muss. Die Vorrichtung erfasst eine vorgesehene Biometrieinformation des Nutzers als biometrische Referenzinformation. Anschließend wird die Kryptografieeinrichtung 5 der Vorrichtung 1 für die Nutzer-ID initialisiert und ein Masterschlüsselpaar, enthaltend einen öffentlichen und einen privaten Schlüssel, generiert. Der öffentliche Schlüssel wird von der Vorrichtung 1 an den Identifizierungsservice versendet und dort zur Erzeugung eines digitalen Datensatzes in Form eines X.509 Zertifikats verwendet, die die Identität des Nutzers in Form seiner Nutzer-ID beinhaltet. Die Vorrichtung 1 selber verfügt über eine eineindeutige Kennung, die sie bei der Übertragung an den Identifizierungsservice mitsendet, damit diese zusammen mit dem digitalen Datensatz im Identifizierungsservice zu den Nutzerdaten gespeichert wird. Weiterhin wird der digitale Datensatz an die Vorrichtung 1 gesendet und dort in der Kryptografieeinrichtung 5 gespeichert, womit die Initialisierung abgeschlossen ist. Dadurch sind die Vorrichtung und die Identität des Nutzers wechselseitig referenziert und aneinander gekoppelt.

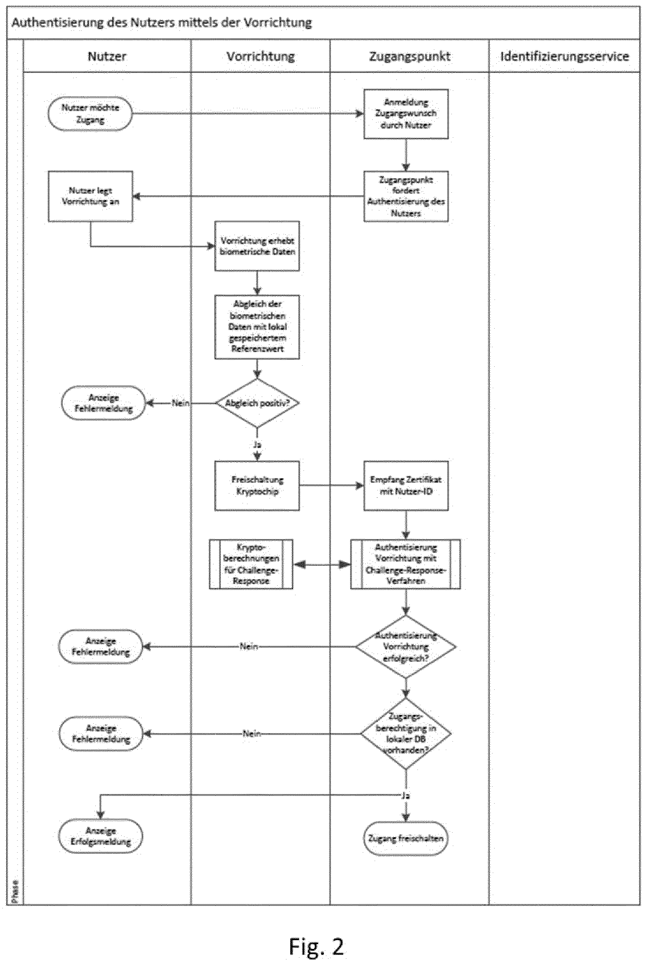

Fig. 2 ist ein Ablaufdiagramm für die Authentisierung des Nutzers. Möchte ein Nutzer beispielsweise Zugang zu einem Zugangspunkt erhalten, so meldet er dies dem Zugangspunkt. Dieser fordert die Authentisierung des Nutzers beim Nutzer an. Dieser legt spätestens jetzt die Vorrichtung 1 an, die mittels einer Informationserhalteeinrichtung 6 die biometrische Information beim Nutzer erhebt und mit der in der Vorrichtung gespeicherten biometrischen Referenzinformation abgleicht. Fällt der Abgleich negativ aus, wird eine Fehlermeldung angezeigt und der Prozess abgebrochen. Die Anzeige kann beispielsweise über ein Display oder einem anderen Signal wie beispielsweise einer Lampe an der Vorrichtung 1 erfolgen. Aber auch der Abbruch des Prozesses kann als Anzeige verstanden werden. Fällt der Abgleich hingegen positiv aus, wird die Kryptografieeinrichtung 5 in der Vorrichtung 1 freigeschaltet, die einen digitalen Datensatz mit der Nutzer-ID an den Zugangspunkt übermittelt. Die Authentisierung der Vorrichtung 1 kann anschließend beispielsweise mit dem Challenge-Response-Verfahren erfolgen. Bei diesem dem Fachmann bekannten Verfahren sendet der Zugangspunkt eine Zufallszahl an die Vorrichtung 1. Die Kryptografieeinrichtung 5 der Vorrichtung 1 ergänzt diese Zahl um ihren öffentlichen Schlüssel, wendet eine kryptologische Verschlüsselung auf diese Kombination an und sendet das Ergebnis an den Zugangspunkt, der sowohl die Zufallszahl als auch den öffentlichen Schlüssel und die verwendete Verschlüsselung kennt, und dieselbe Berechnung durchführt, sein Ergebnis mit dem von der Vorrichtung 1 erhaltenen Ergebnis vergleicht und bei Datenidentität auf erfolgreiche Authentisierung erkennt. Anschließend überprüft der Zugangspunkt beispielsweise, ob die vom Nutzer übermittelte Nutzerkennung wie beispielsweise die Nutzer-ID oder der Schlüssel in einer lokalen Datenbank enthalten ist und gibt den Zugang frei, sofern dies der Fall ist. Eine Erfolgsmeldung kann dem Nutzer angezeigt werden. Im Falle von negativen Vergleichsergebnissen können dem Nutzer Fehlermeldungen angezeigt werden.

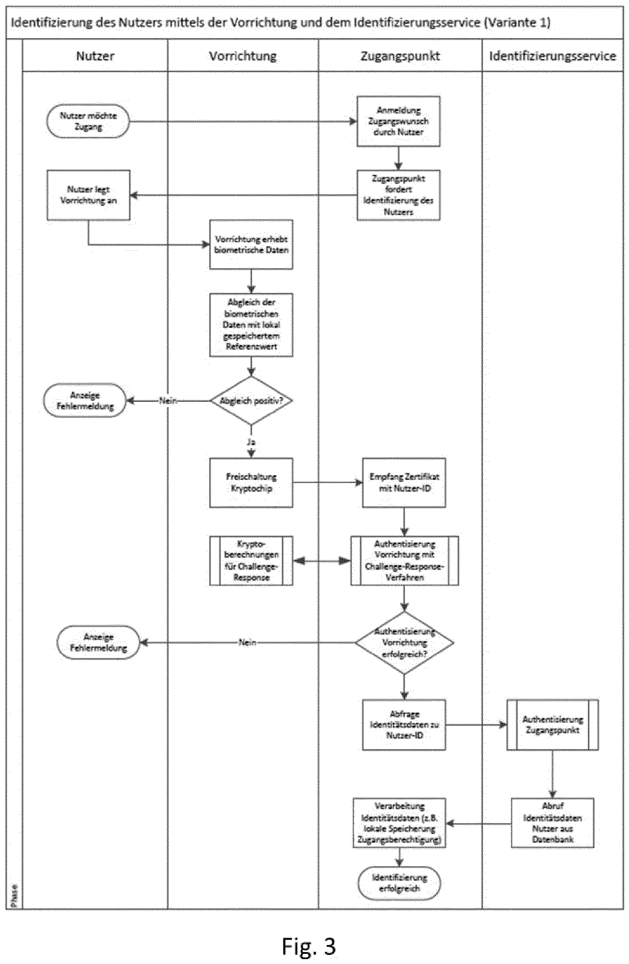

Fig. 3 ist ein Ablaufdiagramm für eine erste Variante für die Identifizierung des Nutzers. Der Nutzer meldet einen Zugangswunsch zu einem Zugangspunk diesem Zugangspunkt. Dieser fordert wie oben beschrieben die Authentisierung des Nutzers beim Nutzer an. Dieser legt spätestens jetzt die Vorrichtung 1 an, die die biometrische Information beim Nutzer erhebt mit der in der Vorrichtung 1 gespeicherten biometrischen Referenzinformation abgleicht. Fällt der Abgleich negativ aus, wird eine Fehlermeldung angezeigt und der Prozess abgebrochen. Die Anzeige kann beispielsweise über ein Display oder einem anderen Signal wie beispielsweise einer Lampe an der Vorrichtung 1 erfolgen. Aber auch der Abbruch des Prozesses kann als Anzeige verstanden werden. Fällt der Abgleich hingegen positiv aus, wird die Kryptografieeinrichtung 5 in der Vorrichtung freigeschaltet, die einen digitalen Datensatz mit der Nutzer-ID an den Zugangspunkt übermittelt. Die Authentisierung der Vorrichtung 1 kann anschließend beispielsweise mit dem Challenge-Response-Verfahren erfolgen. Bei diesem dem Fachmann bekannten Verfahren sendet der Zugangspunkt eine Zufallszahl an die Vorrichtung 1. Die Kryptografieeinrichtung 5 der Vorrichtung 1 ergänzt diese Zahl um ihren öffentlichen Schlüssel, wendet eine kryptologische Verschlüsselung auf diese Kombination an und sendet das Ergebnis an den Zugangspunkt, der sowohl die Zufallszahl als auch den öffentlichen Schlüssel und die verwendete Verschlüsselung kennt, und dieselbe Berechnung durchführt, sein Ergebnis mit dem von der Vorrichtung 1 erhaltenen Ergebnis vergleicht und bei Datenidentität auf erfolgreiche Authentisierung erkennt. An dieser Stelle nun sendet der Zugangspunkt eine Abfrage der Identitätsdaten zu der Nutzer-ID an den Identifizierungsservice. Dieser authentisiert den Zugangspunkt und ruft die Identitätsdaten des Nutzers, identifiziert anhand der Nutzer-ID, aus dem Speicher ab und sendet sie an den Zugangspunkt, wo diese verarbeitet, beispielsweise die Zugangsberechtigung lokal gespeichert werden.

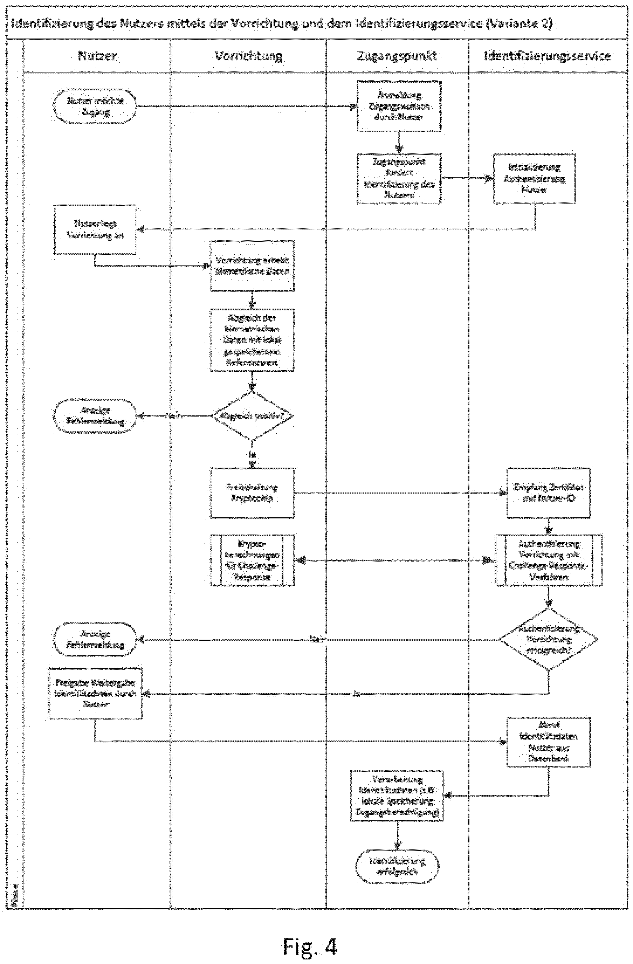

Fig. 4 ist ein Ablaufdiagramm für eine zweite Variante für die Identifizierung des Nutzers. Der Nutzer meldet einen Zugangswunsch zu einem Zugangspunkt an diesen Zugangspunkt. Dieser fordert die Identifizierung des Nutzers beim Identifizierungsservice an. Der Identifizierungsservice fordert daraufhin die Authentisierung des Nutzers bei diesem an. Spätestens jetzt legt der Nutzer die Vorrichtung an, die die biometrische Information beim Nutzer erhebt und mit der in der Vorrichtung 1 gespeicherten biometrischen Referenzinformation abgleicht. Fällt der Abgleich negativ aus, wird eine Fehlermeldung angezeigt und der Prozess abgebrochen. Die Anzeige kann beispielsweise über ein Display oder einem anderen Signal wie beispielsweise einer Lampe an der Vorrichtung erfolgen. Aber auch der Abbruch des Prozesses kann als Anzeige verstanden werden. Fällt der Abgleich hingegen positiv aus, wird die Kryptografieeinrichtung 5 in der Vorrichtung 1 freigeschaltet, die einen digitalen Datensatz mit der Nutzer-ID an den Identifizierungsservice übermittelt. Der Identifizierungsservice authentisiert nun die Vorrichtung 1 beispielsweise mit dem oben beschriebenen Challenge-Response-Verfahren. Sofern die Authentisierung erfolgreich abgeschlossen werden konnte, kann eine Anfrage zur Freischaltung seiner Identitätsdaten an den Nutzer erfolgen. Schaltet er seine Identitätsdaten frei oder im Falle, dass es keiner Anfrage zur Freischaltung bedarf, ruft der Identitätsservice die Identitätsdaten aus seinem Speicher ab und sendet sie an den Zugangspunkt, wo diese verarbeitet, beispielsweise die Zugangsberechtigung lokal gespeichert werden.

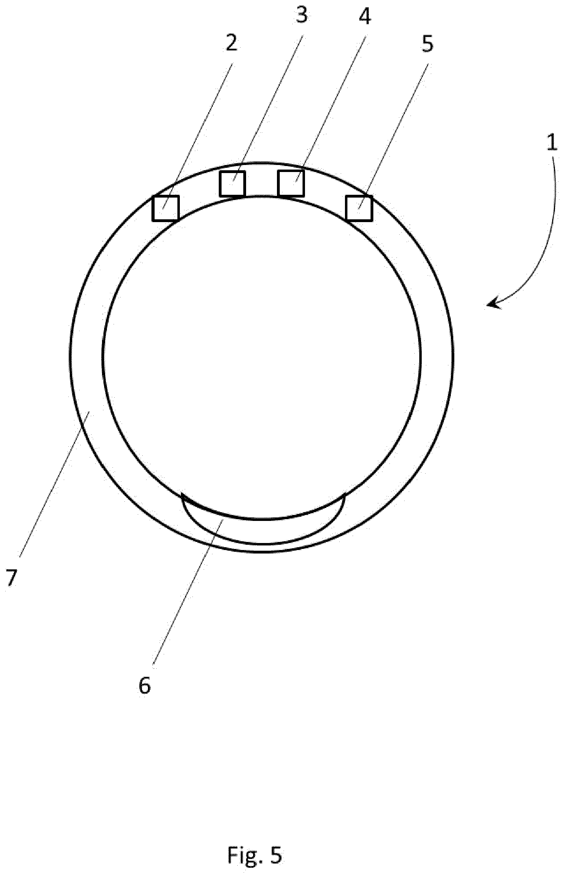

Fig. 5 ist eine Schemadarstellung einer erfinderischen Vorrichtung 1. Die Vorrichtung 1 ist ein Armband 7, das eine Informationserhalteeinrichtung 6 in Form eines Pulssensors aufweist. Weiterhin weist das Armband 7 ein Speichermittel 2 zur Speicherung einer biometrischen Referenzinformation, ein Authentifizierungsmittel 3 zum Vergleichen der biometrischen Information des Nutzers, ein Ausgabemittel 4 zur Ausgabe der Information und eine Kryptografieeinrichtung 5 auf. Die Kryptografieeinrichtung 5 ist dazu eingerichtet, mit der biometrischen Information des Nutzers den Schlüssel zu erzeugen. Alle Komponenten sind in dem Armband mit einer Vergussmasse vergossen, so dass sie nicht zerstörungsfrei aus dem Armband entfernt oder in dem Armband manipuliert werden können.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 1: Vorrichtung
- 2: Speichermittel zur Speicherung einer biometrischen Referenzinformation
- 3: Authentifizierungsmittel zum Vergleichen der biometrischen Information des Nutzers
- 4: Ausgabemittel
- 5: Kryptografieeinrichtung
- 6: Informationserhalteeinrichtung
- 7: Ausrüstungsgegenstand

## Patentansprüche

1. Vorrichtung (1) für die personalisierte Bereitstellung eines Schlüssels für die Bearbeitung einer Zielinformation, wobei die Vorrichtung an einem Nutzer anbringbar ist, umfassend
eine Informationserhalteeinrichtung (6) zum Erhalten einer biometrischer Informationen über den Nutzer;
ein Speichermittel (2) zur Speicherung einer biometrischen Referenzinformation,
ein Authentifizierungsmittel (3) zum Vergleichen der biometrischen Information des Nutzers, erhalten durch die Informationserhalteeinrichtung (6) mit der gespeicherten biometrischen Referenzinformation,
ein Ausgabemittel (4) zur Ausgabe einer Information,
**dadurch gekennzeichnet,**
**dass** die Vorrichtung weiterhin eine Kryptografieeinrichtung (5) enthält, wobei mittels der Kryptografieeinrichtung (5) mit der biometrischen Information des Nutzers der Schlüssel erzeugbar ist oder der Zugriff auf einen zuvor generierten und gespeicherten Schlüssel freischaltbar ist, wobei der Schlüssel über das Ausgabemittel (4) ausgebbar ist.

2. Vorrichtung (1) gemäß Anspruch 1,
**dadurch gekennzeichnet,**
**dass** die Vorrichtung (1) weiterhin einen Sensor umfasst, mittels dessen überprüfbar ist, ob die Vorrichtung (1) an dem Nutzer angebracht ist.

3. Vorrichtung (1) gemäß Anspruch 1 oder 2,
**dadurch gekennzeichnet,**
**dass** die biometrische Information des Nutzers eine nur einem lebenden Organismus abnehmbare Information ist.

4. Vorrichtung (1) gemäß einem der vorherigen Ansprüche,
**dadurch gekennzeichnet,**
**dass** die Vorrichtung (1) in einem Ausrüstungsgegenstand (7) integriert ist, der an dem Nutzer anbringbar ist.

5. Vorrichtung (1) gemäß einem der vorherigen Ansprüche,
**dadurch gekennzeichnet,**
**dass** das Ausgabemittel (4) zur drahtlosen Informationsübermittlung geeignet ist.

6. Vorrichtung (1) gemäß einem der vorherigen Ansprüche,
**dadurch gekennzeichnet,**
**dass** Kryptografieeinrichtung (5) einen Kryptochip aufweist.

7. Verfahren für die personalisierte Bereitstellung eines Schlüssels für die Bearbeitung einer Zielinformation über eine an einem Nutzer anbringbare Vorrichtung (1) mit den Schritten
Erhalten einer biometrischen Informationen über den Nutzer, Vergleichen der erhaltenen biometrischen Information des Nutzers mit einer zuvor gespeicherten biometrischen Referenzinformation, **dadurch gekennzeichnet,**
**dass** das Verfahren weiterhin den Schritt aufweist, dass mit der biometrischen Information des Nutzers der Schlüssel für die Bearbeitung der Zielinformation erzeugt oder der Zugriff auf einen zuvor generierten und gespeicherten Schlüssel freigeschaltet wird.

8. Verfahren gemäß Anspruch 7,
**dadurch gekennzeichnet,**
**dass** das Verfahren weiterhin der Schritt der Überprüfung umfasst, ob die Vorrichtung an dem Nutzer angebracht ist, wobei der Schlüssel nur erzeugt wird, wenn die Vorrichtung an dem Nutzer angebracht ist.

9. Verfahren gemäß einem der Ansprüche 7 oder 8,
**dadurch gekennzeichnet,**
**dass** eine Initialisierung der an dem Nutzer anbringbaren Vorrichtung (1) vorgeschaltet ist, wobei die Initialisierung folgende Schritte aufweist:
Erhebung und Speicherung der Identität des Nutzers;
Vergabe einer eindeutigen Nutzer-ID;
Erhalten einer biometrischen Information über den Nutzer;
Initialisierung einer elektronischen Vorrichtung (1) für die Schlüsselgenerierung für die Nutzer-ID und Generierung eines Masterschlüsselpaars, enthaltend einen öffentlichen und einen privaten Schlüssel;
Erzeugen eines digitalen Datensatzes zur Bestätigung der Identität des Nutzers unter Benutzung des öffentlichen Schlüssels;
Speicherung des digitalen Datensatzes in der Vorrichtung (1).

10. Verfahren gemäß einem der Ansprüche 7 bis 9,
**dadurch gekennzeichnet,**
**dass** die biometrische Information des Nutzers eine nur einem lebenden Organismus abnehmbare Information ist.

11. Verfahren gemäß einem der Ansprüche 7 bis 10,
**dadurch gekennzeichnet,**
**dass** der Schlüssel ausgegeben wird.

12. Verfahren gemäß einem der Ansprüche 7 bis 11,
**dadurch gekennzeichnet,**
**dass** mit dem erzeugten Schlüssel eine zuvor in der Vorrichtung (1) gespeicherte verschlüsselte Information entschlüsselt wird.

13. Verfahren gemäß einem der Ansprüche 7 bis 12,
**dadurch gekennzeichnet,**
**dass** mit dem erzeugten Schlüssel eine zuvor in der Vorrichtung (1) gespeicherte Information verschlüsselt wird.

14. Verfahren gemäß einem der Ansprüche 7 bis 13,
**dadurch gekennzeichnet,**
**dass** mit dem erzeugten Schlüssel eine zuvor in der Vorrichtung (1) gespeicherte Information signiert wird.

15. System für die personalisierte Bereitstellung eines Schlüssels für die Bearbeitung einer Zielinformation,
**dadurch gekennzeichnet,**
**dass** das System eine Initialisierungskomponente, einen Zugangspunkt und eine Vorrichtung (1) gemäß einem der Ansprüche 1-6 enthält, wobei die Initialisierungskomponente Mittel zur Erhebung der Identität eines Nutzers, Mittel zur Speicherung der Identität des Nutzers, Mittel zur Vergabe einer eineindeutigen Nutzer-ID, Mittel zur Erzeugung eines digitalen Datensatzes und Mittel zur Speicherung eines digitalen Datensatzes enthält, und wobei der Zugangspunkt Mittel zur Anmeldung eines Zugangswunsches durch den Nutzer, Mittel zur Anforderung der Authentisierung des Nutzers, Mittel zum Empfang eines digitalen Datensatzes, Mittel zur Authentisierung des Nutzers und Mittel zur Abfrage von Identitätsdaten einer Nutzer-ID aufweist.
